# EUROPÄISCHE PATENTSCHRIFT

(11) **EP 2 544 803 B1**
(45) Veröffentlichungstag und Bekanntmachung des Hinweises auf die Patenterteilung: **06.08.2014**
(21) Anmeldenummer: 11707998.8
(22) Anmeldetag: 24.02.2011
(51) Int. Cl.: B01D 63/16, B01D 33/21

(54) **VORRICHTUNG UND VERFAHREN ZUR VERFAHRENSTECHNISCHEN BEHANDLUNG FESTSTOFFREICHER SUSPENSIONEN**
DEVICE AND METHOD FOR TREATING SUSPENSIONS RICH IN SOLIDS USING PROCESS ENGINEERING
DISPOSITIF ET PROCEDE POUR LE TRAITEMENT DE SUSPENSIONS RICHES EN SOLIDES SELON LA TECHNIQUE CORRESPONDANTE

(30) Priorität: 09.03.2010 DE 102010015871
(43) Veröffentlichungstag der Anmeldung: 16.01.2013
(73) Patentinhaber: TU Kaiserslautern, 67663 Kaiserslautern (DE)
(72) Erfinder: STEINKE, Lars, 67665 Kaiserslautern (DE); GOLDNIK, Denis, 68799 Reilingen (DE); RIPPERGER, Siegfried, 87724 Gonbach (DE)
(74) Vertreter: Knoop, Philipp
(86) Internationale Anmeldenummer: PCT/EP2011/000890
(87) Internationale Veröffentlichungsnummer: WO 2011/110284

(56) Entgegenhaltungen:
- DE-A1- 3 401 607
- DE-A1- 10 104 812
- DE-A1- 19 502 848
- FR-A1- 2 799 391
- JP-A- 62 279 807
- US-A- 6 106 713

## Beschreibung

Die vorliegende Erfindung betrifft eine Vorrichtung zur verfahrenstechnischen Behandlung feststoffreicher Suspensionen, insbesondere solcher mit einem Feststoffanteil von mehr als 2 Vol-%.

Derartige feststoffreiche Suspensionen sind bei einer Reihe von Produkten und Prozessen von großer Bedeutung. Beispielsweise werden solche dispersen Systeme als Polier- und CMP-Slurries, als Pigmente und als Zuschlagstoffe für Nanocomposites eingesetzt. In all den genannten Fällen ist es wichtig, dass die feststoffreichen Suspensionen, die oftmals nanoskalige Partikeln mit Partikelgrößen kleiner 500 nm enthalten, frei von oftmals durch Agglomeration gebildeten, gröberen Partikeln sind, die zu Fehl- oder gefährlichen Schwachstellen in einem späteren Produkt führen können, das unter Verwendung der feststoffreichen Suspensionen hergestellt wurde.

Es ist daher wichtig, über Vorrichtungen zu verfügen, die diese dispersen Systeme im weitesten Sinne homogenisieren, also insbesondere die genannten groben Partikel aussondern oder zerkleinern können. Derartige Verfahren können das Klassieren oder das Dispergieren oder eine Kombination aus beidem sein. Diese Verfahren können je nach Eigenschaft der dispersen Systeme auch durch die Verfahren Sortieren oder Filtrieren ergänzt oder gar ersetzt werden. In vielen Fällen kann sich auch eine Waschung der erhaltenen Fraktionen anschließen. Demnach können solche feststoffreichen Dispersionssysteme grundsätzlich nach Partikelgröße getrennt (klassiert/filtriert), nach der Dichte getrennt (sortiert), durch Partikelagglomerat- oder Partikelaggregationszerstörung homogenisiert (dispergiert) und ergänzend gereinigt (gewaschen) werden. Für jeden dieser einzelnen verfahrenstechnischen Schritte sind aus dem Stand der Technik unterschiedliche Vorrichtungen bekannt, die jeweils einen der genannten verfahrenstechnischen Behandlungsschritte ausüben konnten.

Eine derartige bekannte verfahrenstechnische Vorrichtung ist der sogenannte Scheibenfilter, bei dem eine Suspension in das Filtergehäuse eingeleitet, die Suspensionsflüssigkeit als Permeat über die Filterscheiben und Hohlwelle(n) aus dem Scheibenfilter abgeführt und das verbleibende Retentat kontinuierlich oder diskontinuierlich aus diesem entfernt wird. Der Scheibenfilter weist demnach ein Gehäuse auf, an dem eine Suspensionszuleitung sowie eine Permeatableitung angeordnet sind. Im Gehäuse angeordnet sind eine oder mehrere rotierbare Hohlwellen, die je mindestens eine, vorzugsweise jeweils eine Mehrzahl, voneinander beabstandeter ringförmiger hohler Filterscheiben tragen. Diese hohlen Filterscheiben weisen Filtermittel auf, beispielsweise Köpertressengewebe aus nicht rostendem Stahl oder Keramik-, PP- oder PTFE-Membranen. Die Drehung der Filterscheiben führt dabei dazu, dass sich die Filterelemente nicht stark mit Partikeln zusetzen sondern mindestens teilweise abgereinigt werden.

Ein solcher Scheibenfilter ist beispielsweise aus der DE 10 2007 028 165 A1 bekannt. Dort greifen als Rührer wirkende Scherelemente zwischen die rotierenden Filterscheiben, um durch Scherung der strömenden Suspension eine Querströmung zu erzeugen, die die für die Filtration wichtige Filteroberfläche frei von Retentat hält. Ein Filter mit zwei Hohlwellen ist aus der DE 10 2005 022 653 B4 bekannt, bei der die Filterscheiben sich kämmend ausgebildet sind, so dass jede Filterscheibe einer Hohlwelle gleichzeitig auch als Scherelement für eine andere Filterscheibe der anderen Hohlwelle wirkt und mit dieser einen Scherspalt bildet. Das Vorsehen von Scherelementen führt zu einer noch stärkeren Durchmischung und Verwirbelung der Suspension im Scheibenfilter, etwa nach Art eines Rührkessels, so dass sich die Filterscheiben nicht mit Partikeln zusetzen können und auch keine statische Suspensionssäule im Filter entsteht.

Aus der JP 62 279807 A ist eine Vorrichtung mit einer Hohlwelle in einem Gehäuse angeordnet und mit mehreren ringförmigen Filterschreiben bekannt, welche einen vertikalen Abstandbereich durch ihre Neigung aufweist. Der Behälter weist eine Mehrzahl von Suspensionszuleitungen, eine Permatableitung und eine Mehrzahl von Retentatableitungen auf. Zusätzlich ist eine mittels Ventilen schaltbare Zuleitung geeignet für ein Waschfluid vorgesehen. Die Vorrichtung ist geeignet zum Klassieren von Suspensionen.

Ferner betrifft DE 101 04 812 A1 eine Vorrichtung zum Filtrieren fließfähiger Medien mit den folgenden Merkmalen: mit einer drehbar gelagerten Hohlwelle; mit Filtrationsscheiben, die in gegenseitigen Abständen parallel zueinander und senkrecht zur Drehachse der Hohlwelle angeordnet und mit dieser drehfest verbunden sind; zwischen jeweils einander benachbarten Filtrationsscheiben ist ein ortsfester Statorkörper angeordnet.

DE 195 02 848 A1 offenbart einen Rotationsscherspaltfilter zur Trennung eines Flüssigkeitsstromes in reines Filtrat und angereichertes Konzentrat, bei dem die filtrierenden Flächen ausschliesslich auf rotierenden Scheibenkörpern angeordnet sind, die auf zwei oder mehr parallele Wellen ineinander kämmen.

Es ist Aufgabe der vorliegenden Erfindung, einen bekannten Scheibenfilter so zu modifizieren, dass er sehr lange Betriebszeiten bei entsprechend hoher Trennleistung erreicht und er zur Durchführung weiterer verfahrenstechnischer Behandlungsschritte ertüchtigt ist.

Diese Aufgabe wird bei einer Vorrichtung zur verfahrenstechnischen Behandlung feststoffreicher Suspensionen mit einem Gehäuse, einer daran angeordneten Suspensionszuleitung, einer daran angeordneten Permeatableitung, einer oder mehreren darin angeordneten rotierbaren Hohlwellen, die je mindestens eine, vorzugsweise jeweils eine Mehrzahl, voneinander beabstandeter, ringförmiger Filterscheiben tragen, im einfachsten Fall dadurch gelöst, dass wenigstens eine Filterscheibe einen vertikalen Abstandsbereich zum Gehäuse aufweist. Das erfindungsgemäße Vorsehen eines vertikalen Abstandsbereichs zum Gehäuse, also zum Gehäuseboden und/oder zum Gehäusedeckel anstelle eines bestimmten, in Ruhe- oder Betriebsposition der Filterscheibeninnendruck zwischen einem positiven und einem negativen Höchstwert, mithin also auch die Umkehrung der Druckverhältnisse in der Vorrichtung. Dies hat eine Umkehrung der Flussrichtung des Permeatvolumenstromes zur Folge, so dass sich eine Rückspülung der Filterelemente Filterscheiben ergibt, die wegen der schnellen Pulsation als gleichförmig bezeichnet werden kann. Ein solcher pulsierender Druckgradient führt sowohl zu einer Steigerung als auch zu einer verbesserten Konstantheit des Permeatabstromes. Auf diese Weise werden sehr lange Betriebszeiten ohne größeres Nachlassen der Trennleistung ermöglicht. Das erfinderische Vorsehen eines Abstandsbereiches ist zwar konstruktiv aufwendiger, wird jedoch aufgrund der erreichten Vorteile erfindungsgemäß in Kauf genommen. Bei dieser einfachsten Ausgestaltung der Erfindung kann es zu einem mitrotieren der Suspensionssäule kommen, so dass nur eine relativ geringe Relativbewegung von Filterscheiben und Suspensionssäule zueinander resultiert.

Die Filterscheiben einer Hohlwelle sind mit den Filterscheiben wenigstens einer weiteren Hohlwelle und/oder einem Stator kämmend ausgebildet, wobei die Filterscheiben unterschiedlicher Hohlwellen auch zueinander und/oder jeweils auch zu einem Stator im überkämmten Bereich einen vertikalen Abstandsbereich aufweisen. Diese Weiterbildung erhöht mit Vorteil die Durchmischung der Suspension innerhalb der erfindungsgemäßen Vorrichtung, da eine Mehrzahl an Orten in der Vorrichtung vorgesehen ist, an denen aufgrund der Abstandsänderungen ein pulsierender Druck erzeugt wird. Unter Stator versteht die Erfindung dabei die Gesamtheit der Bauteile innerhalb des Filtergehäuses, die keine Rotationsbewegung ausführen. Ein erfindungsgemäßer Stator kann erfindungsgemäß mehrere voneinander räumlich getrennte Statorelemente aufweisen. Das erfinderische Vorsehen eines Abstandsbereiches im überkämmten Bereich der genannten Bauteile ist zwar konstruktiv aufwendiger, wird jedoch aufgrund der erreichten Vorteile erfindungsgemäß in Kauf genommen.

Die Filterscheiben sind relativ zueinander und/oder relativ zum Stator horizontal geneigt ausgebildet. Diese Neigung stellt eine von mehreren erfindungsgemäßen Arten dar, einen Abstandsbereich zu erzeugen, sei es im kämmenden Bereich der Bauteile zueinander oder im Verhältnis zum Gehäuse in der einfachsten Ausführungsform. Obwohl die horizontale Neigung wenigstens einer Filterscheibe konstruktiv aufwendig ist und beispielsweise die Verwendung kegelstumpfförmiger Distanzscheiben zwischen den einzelnen Filterscheiben erfordert und obwohl eine solche Neigung zu Dreh- und Kippmomenten die Filterscheibenhohlwelle genauso wie die Filterscheibe selber mechanisch stärker belastet, führt diese erfinderische Anordnung wenigstens einer Filterscheibe zu dem gewünschten pulsierenden Druckgradienten. Größter und kleinster Abstand werden dabei in den Randbereichen des kämmenden Bereichs beziehungsweise innerhalb der Randbereich der Filterscheiben im Fall der einfachsten Ausführungsform erreicht.

Insbesondere dann, wenn der horizontale Neigungswinkel der einen oder der mehreren geneigten Filterscheiben zwischen 0,1° und 4,0° beträgt, wird ein optimaler Druckgradient erzeugt, ohne das die Hohlwellen zu unrund laufen und zu große Momente erzeugt würden. Eine mechanische Verstärkung der bekannten Hohlwellen kann daher mit Vorteil unterbleiben. Überraschend hat die Anmelderin gefunden, dass bereits ein solch geringes Maß an horizontaler Neigung der Filterscheiben für eine substantielle Verbesserung der Scheibenfiltereigenschaften ausreichend ist.

Eine weitere erfindungsgemäße Ausgestaltung der Vorrichtung, mit der ein pulsierender Druckgradient erzeugbar ist, ist dass an wenigstens einer Filterscheibe und/oder dem Stator wenigstens ein Element angeordnet ist, welches über die jeweilige Umrissfläche vertikal hinausragend ist und/oder dass wenigstens eine Filterscheibe mit gewellter Oberfläche ausgebildet ist. Ein solches Element kann im einfachsten Fall eine Schraube sein, die in den Stator oder in eine Filterscheibe eingeschraubt wird, oder zwei Schrauben, die zueinander beabstandet in je einem Bauteil im kämmenden Bereich sitzen. Ein solches Element kann sowohl bei geneigter als auch bei horizontal ausgerichteten Filterscheiben/Statoren vorgesehen sein. In jedem Fall verändert das Element den Abstand der Bauteile zueinander im Rahmen seiner körperlichen Ausdehnung. Insbesondere bei periodischem Durchtreten des kämmenden Bereichs ergibt sich die erfindungsgemäße Wirkung einer Erzeugung eines pulsierenden Druckgradienten. Das Element führt im Falle der Anordnung an einer Filterscheibe auch zu einer Unwucht derselben, so dass bei zueinander ungeneigt ausgerichteten Filterscheiben/Statoren durch exzentrisches Rotieren im Betriebszustand ein Abstandsbereich erzeugt wird. Durch diese erfinderische Maßnahme kann mit konstruktiv einfachen und doch lange betriebsfähigen und robusten Mitteln ein förderlicher pulsierender Druck im Waschraum verstärkt werden.

Sind die Statoren erfindungsgemäß permeatdurchlässig, so kann das Permeat auch durch diese abgeführt werden. Hierdurch vergrößert sich die zur Verfügung stehende verfahrenstechnisch wirksame Oberfläche, falls auch die Filterscheiben permeatdurchlässig sind. Sind diese nicht permeatdurchlässig, verschiebt sich der Ort des Permeatabzugs, so dass mit Vorteil andere geometrische Gegebenheiten vorliegen, die zu einer anderen Kräfteverteilung auf die Partikeln führen. Hierdurch können besondere Suspensionen in derselben Vorrichtung mit anderen Schleppkräften, anderen radialen Strömungskräften und damit Auftriebs- oder Liftkräften beaufschlagt werden, so dass sich das mögliche Einsatzspektrum der erfindungsgemäßen Vorrichtung erweitert. Beide Varianten der Permeatdurchlässigkeit sind für das Klassieren, für das Sortieren und für das Waschen geeignet und führen zu diskontinuierlicher oder kontinuierlicher Betriebsweise.

Überraschend hat die Anmelderin festgestellt, dass sich eine Vorrichtung wie beschrieben auch mit großem Vorteil zur Dispergierung einer Suspension oder mehrerer Suspensionen miteinander und/oder zum Klassieren von Suspensionen und/oder zum Sortieren von Suspensionen eignet und somit auf weitere verfahrenstechnische Vorrichtungen verzichtet werden kann. Diese an und für sich überraschende Verwendung eines bekannten oder erfindungsgemäßen Scheibenfilters eröffnet neu verfahrenstechnische Möglichkeiten. Ein erfindungsgemäß modifizierter Scheibenfilter kann daher mehrere Funktionen ausfüllen.

In Ausgestaltung der erfindungsgemäßen Vorrichtung ist vorgesehen, dass sie zusätzlich wenigstens eine Waschfluidzuleitung und/oder eine Retentatableitung aufweist. Überraschenderweise hat die Anmelderin festgestellt, dass ein an sich bekannter Scheibenfilter auch zur Waschung einer Suspension verwendet werden kann, sofern er baulich modifiziert, nämlich mit einer Waschfluidzuleitung versehen wird. Ein solcher erfindungsgemäß modifizierter Scheibenfilter kann entweder einem normalen Scheibenfilter nachgeschaltet sein oder dazu dienen, in ein und demselben Filter zunächst eine Filtration/Klassierung und danach eine Waschung vorzunehmen oder sogar ein kontinuierliches Ersetzen von abgezogener Suspensionsflüssigkeit durch Waschfluid unter Zurückhaltung der in der Suspension enthaltenen Partikeln. Im ersteren Fall würde das feststoffangereicherte oder feststoffhomogenisierte Retentat in die erfindungsgemäße Vorrichtung überführt, im zweiten Fall würde nach einer ersten Verfahrensphase der Filtration in derselben Vorrichtung auch eine Waschung der in der Vorrichtung aufkonzentrierten oder homogenisierten Suspension über die Waschfluidzuleitung vorgenommen, im dritten Fall erfolgte dies kontinuierlich unter Beibehaltung der Partikelkonzentration. Ergänzt wird diese Ausgestaltung durch eine Retentatableitung, so dass der Betrieb kontinuierlich erfolgen kann. Ohne eine solche ist jedoch immer ein Batchbetrieb ermöglicht.

Ist eine eine Waschfluidzuleitung mittels einer Ventilschaltung als Permeatableitung verwendbar, lässt sich gerade bei Vorrichtungen mit mehreren Hohlwellen eine Rückspülung der Filterelemente erreichen, da jede Hohlwelle sowohl als Permeatableitung als auch als Waschfluidzuleitung unter Umkehrung der Strömungsrichtung im ihrem Inneren arbeitend ist.

Der verfahrenstechnische Schritt des Waschens wird oftmals im Anschluß an den verfahrenstechnischen Schritt einer Suspensionsfiltration durchgeführt. Das Waschen des Retentats führt zu einer Verdrängung des dort vorhandenen Restvolumens Suspensionsflüssigkeit. Hierzu wird das Retentat üblicherweise dynamisch von einer Waschflüssigkeit durchströmt, um die Suspensionsflüssigkeit zu verdrängen. Dies ist insbesondere bei Teilchenkollektiven aus kolloiden Partikelsystemen erforderlich, da eine ansonst übliche Verdrängungswäsche eines Filterkuchens aufgrund hoher hydraulischer Durchströmungswiderstände oftmals nicht realisierbar und die Durchströmung des Filterkuchens ungleichförmig ist. Dies gilt insbesondere auch für die eingangs erwähnten feststoffreichen Suspensionen. Die aus dem Stand der Technik auch bekannte Methode, zunächst Suspensionsflüssigkeit abzuziehen und anschließend Waschflüssigkeit zuzusetzen, so dass erst eine Konzentration und anschließend eine Verdünndung der Suspension erfolgen, wird üblicherweise in Membranmodulen durchgeführt, ist bei feststoffreichen Suspensionen jedoch nicht möglich, da diese keine ausreichende Fließfähigkeit aufweisen.

Erfindungsgemäß ist daher eine Waschvorrichtung und ein Waschverfahren für feststoffreiche Suspensionen, welches eine möglichst vollständige Waschung der Suspension und damit Verdrängung der Suspensionsflüssigkeit ermöglicht. Der Erfindung ist es zunächst nicht wichtig, ob die Waschfluidzuleitung direkt am Filtergehäuse oder an einem der bekanntermaßen am Filter bereits vorhandenen Bauteile anschließt. Der Erfindung ist es zunächst ebenfalls nicht wichtig, ob die Vorrichtung eine, zwei oder mehr filterscheibentragende Hohlwellen aufweist. Wichtig ist nur, dass neben den bekannten Zu- und Ablaufanschlüssen eine weitere für Waschfluid vorgesehen ist. Erfindungsgemäß wird jedoch in jedem Fall die verdrängte Suspensionsflüssigkeit durch die eine oder mehrere Hohlwellen und/oder den Stator aus der erfindungsgemäßen Vorrichtung abgezogen.

In Ausgestaltung der Erfindung ist mit großem Vorteil vorgesehen, dass die Waschfluidzuleitung in eine Hohlwelle und/oder wenigstens einen Stator im Inneren des Gehäuses mündend ist. Das Zudosieren der Waschflüssigkeit durch eine Hohlwelle ist besonders bei solchen Ausgestaltungen mit zwei oder mehr Hohlwellen bevorzugt, da diese Ausgestaltung die bereits vorhandenen Fluidanschlüsse und -wege der Vorrichtung nutzt. Lediglich die Strömungsrichtung wird umgekehrt, statt durch eine Hohlwelle Permeat abzuziehen, wird Waschfluid zudosiert. Bei n>2 Hohlwellen in der Vorrichtung sind erfindungsgemäß x Hohlwellen zur Waschfluidzuleitung ausgelegt und n-x Hohlwellen zum Abziehen der verdrängten Suspensionsflüssigkeit, wobei mittels einer erfindungsgemäßen Ventilschaltung die Zuordnung von x und n-x-Eigenschaften auch getauscht werden kann. Erfindungsgemäß kann die Zuleitung auch durch einen oder mehrere Statoren erfolgen, die in an sich bekannter Weise kämmend zu den rotierenden Filterscheiben an der Gehäusewand angeordnet sind. Auch hier gilt das zuvor Gesagte, wonach durch Wahl des Ortes der Permeat/Waschflüssigkeitsdurchlässigkeit der Einsatzbereich der Vorrichtung erweitert wird.

Die Verfahrensaufgabe zum kontinuierlichen oder diskontinuierlichen Waschen feststoffreicher Suspensionen wird dadurch gelöst, dass eine feststoffreiche Suspension in eine erfindungsgemäße Vorrichtung geleitet wird, in die Vorrichtung Waschfluid eingeleitet wird und die vom Waschfluid verdrängte Suspensionsflüssigkeit abgezogen wird. Das erfindungsgemäße Verfahren erlaubt mit großem Vorteil die Verwendung einer an sich bekannten Vorrichtung nach baulicher Modifikation für einen gänzlich anderen Einsatzzweck und vereint so die Vorteile eines Scheibenfilters mit denjenigen einer guten Waschung.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: einen schematischen Querschnitt durch eine erfindungsgemäße Ausführungsform mit einer Hohlwelle, geneigten Filterscheiben und einem Stator,
- Fig. 2:: einen schematischen Querschnitt durch eine zweite erfindungsgemäße Ausführungsform mit drei kämmenden Hohlwellen und
- Fig. 3:: eine schematische Aufsicht auf eine erfindungsgemäße Ausführungsform mit vier Hohlwellen.

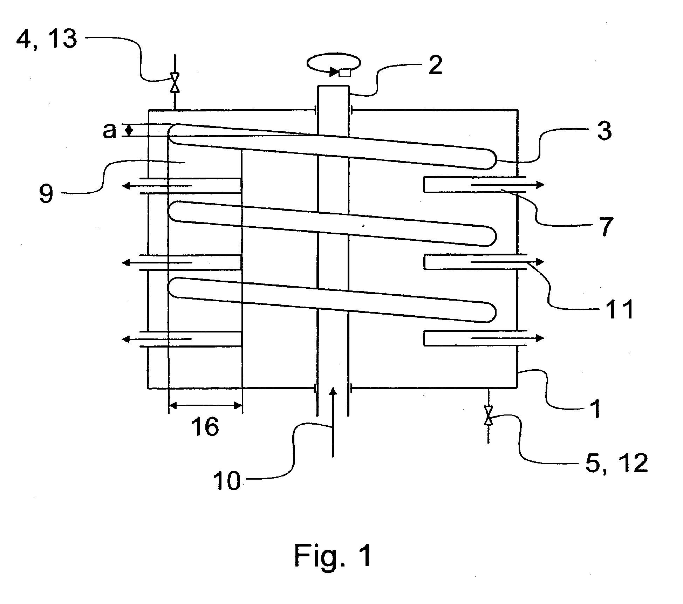

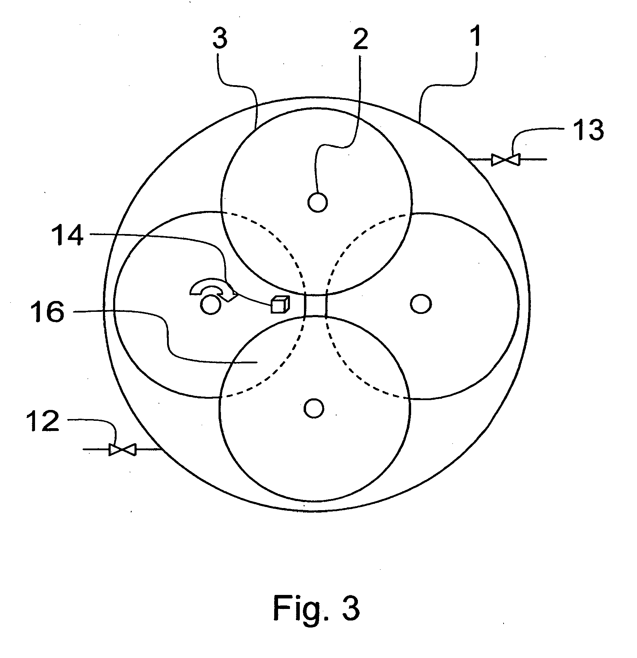

Fig. 1 zeigt einen schematischen Querschnitt durch eine Ausführungsform der Erfindung. In einem Gehäuse 1 aus Edelstahl oder dergleichen ist eine metallene Hohlwelle 2 drehbar und fluiddicht gelagert. Diese Hohlwelle 2 trägt voneinander axial beabstandet mehrere Filterscheiben 3, die in bekannter Weise gefertigt sind und Filterelemente aus Metall, Keramik, Kunststoff oder Mischungen daraus tragen. Grundsätzlich weisen die Filterscheiben 3 und die Hohlwelle 2 erfindungsgemäß ähnliche thermische Ausdehnungskoeffizienten auf, da die in der Vorrichtung ablaufenden Verfahrensschritte oftmals bei erhöhten oder sich ändernden Temperaturen durchgeführt werden. An der Wand des Gehäuses 1 ist schematisch ein Stator 7 mit mehreren, voneinander räumlich getrennten Statorelementen angeordnet, der mit seinen einzelnen Elementen kämmend zwischen die horizontal geneigten Filterscheiben 2 greift, so dass kämmende Bereiche 16 erzeugt werden, wie auch aus Fig. 3 hervorgeht. Hierdurch ergibt sich ebenfalls ein Scherspalt 9, der zu Verwirbelungen der im Gehäuse 1 befindlichen Suspension führt. Wie bei einem handelsüblichen Scheibenfilter auch, wird die zu behandelnde Suspension durch eine Suspensionszuleitung 4 in das Innere des Gehäuses 1 eingeführt. Im einfachsten Fall eines Batchbetriebes kann diese Suspensionszuleitung 4 auch als Retentatableitung verwendet werden. Die Filterscheiben 3 sind relativ zum Stator 7 horizontal geneigt ausgebildet und weisen hier einen Durchmesser von 500 mm auf. Der skizzierte Abstand a beträgt hier zwischen 1 und 10 mm am äußeren Rand der Filterscheiben 3. Dies führt zu einem Versatzwinkel zwischen 0,23° und 2,29°. Wie zuvor beschrieben, erzeugt dies einen pulsierenden Druckgradienten mit den zuvor genannten Vorteilen. Je nach Drehzahl der Filterscheibe, die beispielsweise zwischen 200 min⁻¹ und 600 min⁻¹ liegen kann, stellen sich unterschiedliche Differenzdrücke zwischen Druck auf der Suspensionsseite und Druck auf der Permeatseite ein. Diese liegen beispielsweise im Mittel zwischen ca. 0,7 bar bis ca. 1,5 bar. Korrigiert man diese Druckdifferenz um den Schlupf zwischen rotierender Scheibe und rotierendem Suspensionskörper, so ergibt sich beispielsweise ein pulsierender Druckgradient zwischen ca. + 0,1 bar bis ca. - 0,8 bar. Der Überdruck schwankt demnach zwischen Permeat- und Suspensionsseite, was unterschiedliche Flussrichtungen des Permeatvolumenstromes zur Folge hat. Durch die schnellen Änderungen der Druckverhältnisse stellt sich eine kontinuierliche Rückspülung des Filterelements der Filterscheibe 3 ein.

Fig. 1 zeigt weiterhin diejenige Ausführung der Erfindung, bei der eine Zuleitung 10 vorgesehen ist, mittels derer Waschfluid über die Hohlwelle 2 und die Filterscheiben 3 in die Suspension geleitet wird. Die aus der Suspension verdrängte Suspensionsflüssigkeit wird über eine Ableitung 11 aus dem Filter entfernt, wobei die Ableitung 11 hier in dem Stator 7 angeordnet ist. Demnach sind hier sowohl Filterscheiben 3 als auch Stator 7 permeatdurchlässig, so dass ein kontinuierlicher Betrieb der Vorrichtung möglich ist. Selbstverständlich könnte erfindungsgemäß auch die Zuleitung 10 des Waschfluids durch den Stator 7 erfolgen und die Ableitung der verdrängten Suspensionsflüssigkeit durch die Hohlwelle 2. In diesem Fall tauschen die dargestellte Zuleitung 10 und Ableitung 11 ihre Funktion. Diese Variante ist bevorzugt, da sie konstruktiv einfacher umsetzbar ist und die bereits vorhandenen und in ihren Eigenschaften bereits optimierten Filteroberflächen der Scheiben 3 nutzt.

Nicht dargestellt ist die einfachste Ausführungsform der Erfindung, bei der lediglich eine Hohlwelle mit horizontal geneigten Filterscheiben oder mit horizontal geraden Filterscheiben, die abstandsbereicherzeugende Elemente tragen, im Inneren des Gehäuses angeordnet ist und auf einen Stator oder andere Hohlwellen verzichtet wird.

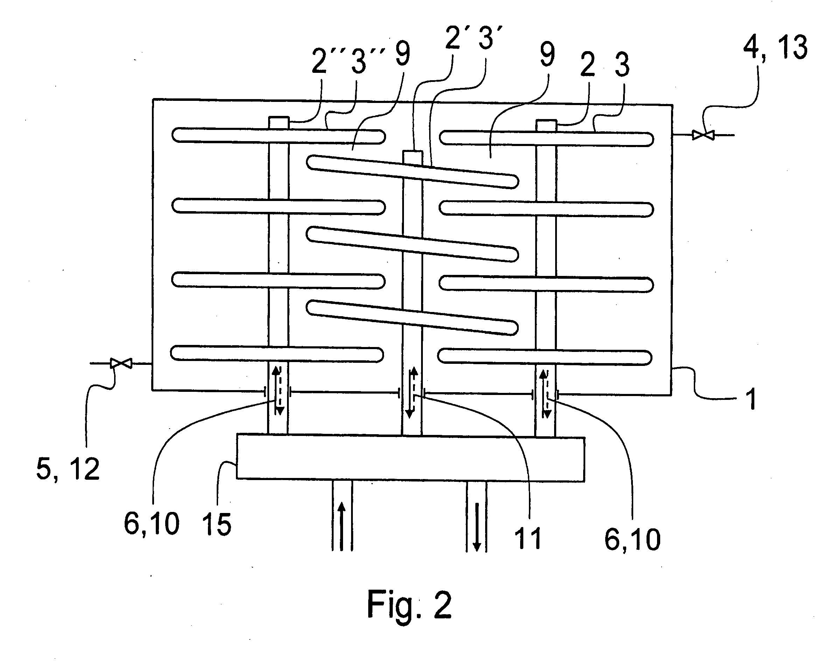

Fig. 2 zeigt eine schematische Darstellung einer Ausführungsform mit drei Hohlwellen 2, 2'und 2". Bei dieser Ausführungsform kämmen die Filterscheiben 3 einer Hohlwelle 2 mit denjenigen der anderen Hohlwellen, so dass jede Filterscheibe 3, 3', 3" einen Scherspalt mit wenigstens einer anderen Filterscheibe 3, 3', 3" bildet. Hierbei kann entweder die mittlere oder die beiden randständigen Hohlwellen 2 horizontal geneigte Filterscheiben 3 tragen, wobei die erstere Version dargestellt ist. Es ist auch denkbar, dass alle drei Hohlwellen zueinander geneigte Filterscheiben tragen, wobei dann mehr als eine Neigungsrichtung vorgesehen ist. Bei dieser Ausführungsform ist ebenfalls eine Ventilschaltung 15 vorgesehen, mittels derer die einzelnen Hohlwellen 2 als Zuleitung 10 oder Ableitung 11 schaltbar sind. Die beiden Schaltzustände sind durch durchgezogene und gestrichelte Pfeile angegeben, die die jeweilige Strömungsrichtung in der Hohlwelle angeben. Diese Ventilschaltung 15 ist lediglich schematisch dargestellt. Diese Ausführungsform könnte erfindungsgemäß dadurch ergänzt werden, dass Statorelemente vorgesehen sind, die in die randständigen Hohlwellen kämmend eingreifen.

Im Fall einer zur Waschung verwendeten Vorrichtung ist erfindungsgemäß vorgesehen, das Waschfluid, oftmals Wasser, durch die beiden randständigen Hohlwellen 3, 3" zuzuführen und die verdrängte Suspensionsflüssigkeit durch die mittlere Hohlwelle 3' abzuziehen. In diesem Fall wäre n=3 und x=2. Selbstverständlich ist auch der Fall erfindungsgemäß, bei dem x=1 wäre, also durch eine Hohlwelle Waschflüssigkeit zudosiert und durch zwei andere verdrängte Suspensionsflüssigkeit abgezogen wird.

In Fig. 3 zeigt schließlich eine schematische Aufsicht auf eine nicht erfindungsgemäße Ausführungsform mit vier Hohlwellen 2. Bei dieser Anordnung kämmt jede Filterscheibe 3 mit zwei anderen Filterscheiben 3, so dass sich pro Filterscheibe zwei kämmende Bereiche 16 ergeben. Obwohl auch diese Ausführungsform zueinander geneigte Filterscheiben aufweisen könnte, ist hier diejenige dargestellt, bei der die horizontal und nicht geneigt zueinander ausgerichteten Filterscheiben 3 Elemente 14 tragen, von denen eines schematisch perspektiv dargestellt ist. Im Betriebszustand tritt dieses Element 14 periodisch in den Scherspalt ein und unterläuft somit eine andere Filterscheibe 3. Während dieses Durchgangs wird der ansonsten feste und gleich bleibende Abstand beider Filterscheiben durch einen Bereich von Abständen ersetzt, so dass sich auf diese Weise ein pulsierender Druckgradient ergibt. Das Element 14 führt aufgrund unterschiedlichen Strömungswiderstands ebenfalls dazu, dass die es tragende Filterscheibe 3 exzentrisch rotiert, mithin durch diese Art "wackelndem Rotieren" die Variabilität im Abstand zu einer anderen Filterscheibe noch erhöht und damit die Pulsation des Druckgradienten noch verstärkt.

### BEZUGSZEICHENLISTE

- 1: Gehäuse
- 2: Hohlwelle
- 3: Filterscheibe
- 4: Suspensionszuleitung
- 5: Permeatableitung
- 6: Waschfluidzuleitung
- 7: Stator
- 8: Scherelement
- 9: Scherspalt
- 10: Zuleitung
- 11: Ableitung
- 12: Retentatableitung
- 13: Suspensionszuleitung
- 14: Element
- 15: Ventilschaltung
- 16: kämmender Bereich

## Patentansprüche

1. Vorrichtung zur verfahrenstechnischen Behandlung feststoffreicher Suspensionen mit einem Gehäuse (1), einer daran angeordneten Suspensionszuleitung (4), einer daran angeordneten Permeatableitung (5), einer oder mehreren darin angeordneten rotierbaren Hohlwellen (2), die je mindestens eine, vorzugsweise jeweils eine Mehrzahl, voneinander beabstandeter, ringförmiger Filterscheiben (3) tragen, **wobei** wenigstens eine Filterscheibe (3) einen vertikalen Abstandsbereich mit einem sich im rotierenden Betriebszustand ständig ändernden Abstand zum Gehäuseboden und/oder zum Gehäusedeckel (1) aufweist
**dadurch gekennzeichnet, dass** die Filterscheiben (3) einer Hohlwelle (2) mit den Filterscheiben (3) wenigstens einer weiteren Hohlwelle (2) und/oder einem Stator (7) kämmend ausgebildet sind, wobei die Filterscheiben (3) unterschiedlicher Hohlwellen (2) auch zueinander und/oder jeweils auch zu einem Stator (7) im überkämmten Bereich einen vertikalen Abstandsbereich aufweisen, indem die Filterscheiben (3) relativ zum Stator (7) horizontal geneigt ausgebildet sind und/oder indem die Filterscheiben (3) unterschiedlicher Hohlwellen relativ zueinander horizontal geneigt ausgebildet sind.

2. Vorrichtung nach Anspruch 1, **dadurch gekennzeichnet, dass** der horizontale Neigungswinkel der Filterscheiben (3) zwischen 0,1° und 4,0° beträgt.

3. Vorrichtung nach einem der vorherigen Ansprüche, **dadurch gekennzeichnet, dass** an wenigstens einer Filterscheibe (3) und/oder dem Stator (7) wenigstens ein abstandsbereicherzeugendes Element (14) angeordnet ist.

4. Vorrichtung nach einem der vorherigen Ansprüche, **dadurch gekennzeichnet, dass** der Stator (7) permeatdurchlässig ist.

5. Vorrichtung nach einem der vorherigen Ansprüche, **dadurch gekennzeichnet, dass** wenigstens eine Filterscheibe (3) permeatundurchlässig ist.

6. Vorrichtung nach einem der vorherigen Ansprüche, **dadurch gekennzeichnet, dass** sie zusätzlich wenigstens eine Waschfluidzuleitung (6) und/oder eine Retentatableitung (12) aufweist.

7. Vorrichtung gemäß Anspruch 6, **dadurch gekennzeichnet, dass** die Waschfluidzuleitung (6) in eine Hohlwelle (2) und/oder wenigstens einen Stator (7) mündend ist.

8. Vorrichtung gemäß Anspruch 6 oder 7, **dadurch gekennzeichnet, dass** eine Waschfluidzuleitung (6) mittels einer Ventilschaltung (15) als Permeatableitung (5) verwendbar ist.

9. Verwendung einer Vorrichtung gemäß einem der Ansprüche 1 bis 10 zur Dispergierung von einer Suspension oder mehrerer Suspensionen miteinander und/oder zum Klassieren von Suspensionen und/oder zum Sortieren von Suspensionen.

10. Verwendung einer Vorrichtung gemäß einem der Ansprüche 6 bis 8 zum Waschen von Suspensionen.

11. Verfahren zur kontinuierlichen oder diskontinuierlichen Waschung feststoffreicher Suspensionen, bei dem eine feststoffreiche Suspension in eine Vorrichtung gemäß einem der Ansprüche 1 bis 8 geleitet wird, in die Vorrichtung Waschfluid eingeleitet und Suspensionsflüssigkeit abgezogen wird.

## Claims

1. Device for treating suspensions rich in solids, using process engineering, comprising a housing (1), a suspension feed line (4) arranged thereon, a permeate discharge line (5) arranged thereon, one or more rotatable hollow shafts (2) arranged therein, each of which supports at least one annular filter disc (3), preferably a plurality of annular filter discs (3) which are spaced apart, at least one filter disc (3) having a region of vertical spacing, of which the spacing from the housing base and/or housing lid (1) constantly changes when rotating,
**characterised in that** the filter discs (3) of a hollow shaft (2) are configured so as to mesh with the filter discs (3) of at least one further hollow shaft (2) and/or with a stator (7), the filter discs (3) of different hollow shafts (2) also having, in the meshed region, a region of vertical spacing from one another and/or from a stator (7) respectively, by the filter discs (3) being horizontally inclined relative to the stator (7) and/or by the filter discs (3) of different hollow shafts being horizontally inclined relative to one another.

2. Device according to claim 1, **characterised in that** the horizontal inclination angle of the filter discs (3) is between 0.1° and 4.0°.

3. Device according to any of the preceding claims, **characterised in that** at least one spacer (14) is arranged on at least one filter disc (3) and/or on the stator (7).

4. Device according to any of the preceding claims, **characterised in that** the stator (7) is permeable to the permeate.

5. Device according to any of the preceding claims, **characterised in that** at least one filter disc (3) is not permeable to the permeate.

6. Device according to any of the preceding claims, **characterised in that**, in addition, said device has at least one washing fluid feed line (6) and/or one retentate discharge line (12).

7. Device according to claim 6, **characterised in that** the washing fluid feed line (6) opens into a hollow shaft (2) and/or into at least one stator (7).

8. Device according to either claim 6 or claim 7, **characterised in that** a washing fluid feed line (6) can, by means of a valve switching function (15), be used as a permeate discharge line (5).

9. Use of a device according to any of claims 1 to 10 for dispersing one suspension or a plurality of suspensions with one another and/or for classifying suspensions and/or for sorting suspensions.

10. Use of a device according to claims 6 to 8 for washing suspensions.

11. Method for continuously or intermittently washing suspensions rich in solids, in which method a suspension rich in solids is conveyed into a device according to any of claims 1 to 8, washing fluid is introduced into said device, and suspension liquid is drawn off.

## Revendications

1. Dispositif pour le traitement technique par procédés de suspensions riches en matières solides avec un boîtier (1), un conduit d'arrivée de suspension (4) disposé dessus, un conduit d'évacuation du perméat (5) disposé dessus, un ou plusieurs arbres creux (2) rotatifs disposés dedans qui portent chacun au moins un, de préférence à chaque fois une pluralité de disques de filtre (3) de forme annulaire, distants les uns des autres, au moins un disque de filtre (3) comportant une zone d'espacement verticale avec un espace se modifiant en permanence à l'état de fonctionnement en rotation par rapport au fond du boîtier et/ou par rapport au couvercle du boîtier (1)**caractérisé en ce que** les disques de filtre (3) d'un arbre creux (2) sont constitués s'engrenant avec les disques de filtre (3) d'au moins un autre arbre creux (2) et/ou un stator (7), les disque de filtre (3) des différentes arbres creux (2) présentant également entre eux et/ou respectivement par rapport au stator (7) dans la zone surengrenée une zone d'espacement verticale dans laquelle les disques de filtre (3) sont constitués horizontalement inclinés par rapport au stator (7) et/ou dans laquelle les disques de filtre (3) des différents arbres creux sont constitués horizontalement inclinés les uns par rapport aux autres.

2. Dispositif selon la revendication 1 **caractérisé en ce que** l'angle d'inclinaison horizontal des disques de filtre (3) se situe entre 0,1° et 4,0°.

3. Dispositif selon une quelconque des revendications précédentes **caractérisé en ce que** sur au moins un disque de filtre (3) et/ou le stator (7) est situé au moins un élément générant une zone d'espacement (14).

4. Dispositif selon une quelconque des revendications précédentes **caractérisé en ce que** le stator (7) est perméable au perméat.

5. Dispositif selon une quelconque des revendications précédentes **caractérisé en ce qu'**au moins un disque de filtre (3) est perméable au perméat.

6. Dispositif selon une quelconque des revendications précédentes **caractérisé en ce qu'**il comporte en plus au moins un conduit d'arrivée de fluide de lavage (6) et/ou un conduit d'évacuation du rétentat (12).

7. Dispositif selon la revendication 6 **caractérisé en ce que** la conduite d'arrivée de fluide de lavage (6) débouche dans un arbre creux (2) et/ou au moins un stator (7).

8. Dispositif selon la revendication 6 ou 7 **caractérisé en ce qu'**une conduite d'arrivée de fluide de lavage (6) peut être utilisée au moyen d'un montage de soupape (15) comme conduite d'évacuation de perméat (5).

9. Utilisation d'un dispositif selon une quelconque des revendications 1 à 10 pour disperser une suspension ou plusieurs suspensions ensemble et/ou pour classer des suspensions et ou pour trier des suspensions.

10. Utilisation d'un dispositif selon une quelconque des revendications 6 à 8 pour laver des suspensions.

11. Procédé pour lavage continu ou discontinu de suspensions riches en matières solides pour lequel une suspension riches en matières solides est dirigée dans un dispositif selon une quelconque des revendications 1 à 8, un fluide de lavage étant introduit et un liquide de suspension étant extrait dans le dispositif.
